# EUROPÄISCHE PATENTSCHRIFT

(11) **EP 0 924 681 B1**
(45) Veröffentlichungstag und Bekanntmachung des Hinweises auf die Patenterteilung: **30.06.2004**
(21) Anmeldenummer: 98121310.1
(22) Anmeldetag: 09.11.1998
(51) Int. Cl.: G09F 27/00

(54) **Lotsensystem für Fluggäste**
System for guiding air passengers
Système de guidage pour passagers d'avions

(30) Priorität: 18.12.1997 DE 29722343 U
(43) Veröffentlichungstag der Anmeldung: 23.06.1999
(73) Patentinhaber: EXPRESSO DEUTSCHLAND TRANSPORTGERÄTE GmbH, D-34123 Kassel (DE)
(72) Erfinder: Kratzenberg, Wolfgang, 34270 Schauenburg (DE); Stein, Siegfried, 34246 Vellmar (DE)
(74) Vertreter: Schön, Theodor, Patent- und Zivilingenieur

(56) Entgegenhaltungen:
- DE-A- 3 932 550
- DE-A- 4 314 286
- DE-A- 19 521 929
- GB-A- 2 298 539
- US-A- 5 406 271

## Beschreibung

Die Erfindung bezieht sich auf ein Lotsensystem für Fluggäste in Flughäfen mit einer Vielzahl untereinander über Gänge und Wege verbundener Flugsteige, sog. Gates, und einer Anzahl mehr oder minder zentral angeordneter Abfertigungseinrichtungen sowie einer Ankunfts-und Abflughalle mit Ladengeschäften und Restaurants und dergl. Versorgungseinrichtungen und einer Wegweisung durch Hinweistafeln und dergl. schriftliche Informationen enthaltenden Informationsträgern, wobei den Fluggästen Schubgepäckwagen zur Beförderung ihres Gepäckes angeboten werden, und wobei zur Lenkung bzw. Information der Fluggäste einerseits über die Fläche der Anlage hin verteilt eine Vielzahl von Sendestationen angeordnet ist und andererseits die Schubgepäckwagen jeweils mit einem mittels einer Einrichtung zur Eingabe einer Zielvorgabe einschaltbaren, zumindest optische Signale zur Wegweisung vermittelnden Empfänger, insbesondere einem Wegweisungssymbole aufzeigenden Display ausgestattet sind.

Ein derartiges Lotsen-oder Leitsystem vor allem für Fluggäste in Flughäfen oder aber auch in Bahnhöfen mit einer Vielzahl untereinander über Gänge und Wege verbundener Flug- oder Bahnsteige, sog. Gates, und einer Anzahl mehr oder minder zentral angeordneter Abfertigungseinrichtungen sowie einer Ankunfts-und Abflughalle mit Ladengeschäften und Restaurants und dergl. Versorgungseinrichtungen ist an sich aus der DE-OS 39 32 550 bekannt. Dieses System trägt dem Umstand Rechnung, daß mit zunehmender Nutzung des Flugzeuges als Reisetransportmittel und damit zunehmendem Flugverkehr notwendigerweise auch die Flughafenanlagen wie auch die Bahnhofanlagen immer weitläufiger und damit zumindest auch für den weniger erfahrenen Bahn-oder Fluggast unübersichtlicher werden.
Zwar sind sowohl Flughäfen als auch Bahnhöfe im allgemeinen mit einer hinreichenden Anzahl von Informationstafeln zur Wegweisung ausgestattet, jedoch erfordert deren Studium in vielen Fällen einerseits gewisse Sprachkenntnisse, welche nicht immer vorhanden sind und zum anderen einen manchmal, insbesondere im zentralen Bereich der Flughafenoder Bahnhofanlage wegen der Fülle der angezeigten Informationen nicht unbeträchtlichen Zeitaufwand erfordern. Im Fernflugverkehr kommt zu alledem noch, daß in verschiedenen Gegenden der Welt unterschiedliche Schriftzeichen verwendet werden, so daß sich ein weder der Sprache noch der Schriftzeichen des Landes kundiger Fluggast bei der Suche nach seinem Flugsteig, insbesondere dann wenn er ohnehin in Eile ist, vor erhebliche Probleme gestellt sieht.
Es besteht daher ein Bedürfnis nach einer möglichst individuellen Führung des Fluggastes vom Abfertigungsschalter zum jeweils momentan zutreffeneden Flugsteig.
Neben der sicheren Wegweisung zum jeweils momentan zutreffeneden Flugsteig kann für den einzelnen Fluggast auch noch die Übermittlung sonstiger Informationen, insbesondere die Übermittlung von wissenswerten Informationen über die momentanen oder zumindest die bei seiner Ankunft zu erwartenden Verhältnisse am Zielort von Interesse sein.

Der Erfindung liegt somit die Aufgabe zugrunde ein für Flughafen-oder Bahnhofanlagen geeignetes Lotsensystem zu schaffen, welches es bei einfachster Bedienungsweise gestattet einen Fluggast oder Bahngast auf kürzestem Weg und damit in kürzester Zeit vom Abfertigungsschalter zum jeweils zutreffeneden Flugsteig bzw. Bahnsteig zu leiten, ohne Rücksicht darauf, ob der Fluggast oder Bahngast hinreichende Sprachkenntnisse zum Lesen der auf der Anlage vorhandenen Anzeigetafeln und Informationsträger verfügt oder nicht.

Diese Aufgabe wird erfindungsgemäß im Wesentlichen dadurch gelöst, daß der optische Signale zur Wegweisung vermittelnde Empfänger, insbesondere ein Wegweisungssymbole aufzeigendes Display ein Eingabefeld zur Auswahl einer gewünschten Zielvorgabe als sog. Touch-Screen ausgebildet und außer mit einer Ziffemwählscheibe für die Eingabe einer Flugnummer oder einer Flugsteignummer mit einer Vielzahl vorprogrammierter standardisierter Zielvorgaben, wie Eisenbahn, Taxi oder Leihwagenvermittlung versehen ist, wobei die Zielvorgabe für die an den Schubgepäckwagen angeordneten Wegweisungseinrichtungen hinsichtlich des gewünschten Zieles indirekt durch Eingabe eines Symbolbegriffes, wie Flugnummer oder Flugziel, oder aber Taxi oder Eisenbahn programmierbar ist.
Der Einsatz einer sog. Touch-Screen zum Aufrufen von in einem Speicher gespeicherten Symbolbegriffen, welche zumindest für einen Teil der insgesamt möglichen Zielvorgaben darstellen und hier in Sonderheit für Zielvorgaben von unveränderlich in der Flughafenanlage angeordneten Zielen, wie beispielsweise Restaurant, Taxistand, Haltestellen öffentlicher Verkehrsmittel oder Leihwagenvermittler bzw. sonstiger Dienstleister betreffen, ermöglicht es ohne besonderen Aufwand sprachunabhängig international verständliche Symbole zur Abfrage bestimmter Informationen zu verwenden. Ferner istvorgesehen, daß die Zielvorgabe für die an den Schubgepäckwagen angeordneten Wegweisungseinrichtungen hinsichtlich des gewünschten Zieles auch indirekt durch Eingabe eines Symbolbegriffes, wie Flugnummer oder Flugziel, oder aber Taxi oder Eisenbahn programmierbar sein.

Zur Eingabe variabler Zielvorgaben bzw. variabler Bestandteile von Zielvorgaben, wie Flugnummer oder Flugsteignummer bzw. Zielort oder Nationalität des Fluggastes ist das Eingabefeld ferner mit einer Ziffernwählscheibe oder einer vergleichbaren Ziffern-bzw. Buchstabeneingabe versehen.

Im Unterschied zu solchen Wegweisungseinrichtungen, bei denen die einzuhaltende Richtung individuell an Anzeigetafeln, die an jeder Abzweigung angeordnet sind, angezeigt wird, kann mit der hier vorgeschlagenen Wegweisung jeder Fluggast über eine individuelle Information bzw. Anleitung auf dem schnellsten Wege an sein Ziel geführt werden. Insbesondere ist bei dem hier vorgeschlagenen Lotsensystem keine Überschneidung von Wegweisungen für verschiedene Zielrichtungen möglich, wie dies beim Einsatz von Informationstafeln insbesondere im zentralen Bereich der Flughafenanlage möglich ist. Insbesondere ist eine über die gesamte zurückzulegende Strecke hin lückenlose Führung jedes Fluggastes zu seinem jeweiligen Ziel, beispielsweise zu dem für seinen Flug zuständigen Flugsteig zu gewährleistet.
Hinsichtlich des Informations-oder Datenaustausches zwischen den der jeweils wagengebundenen Zielvorgabeeinrichtung zugeordneten und einer oder mehreren stationären Leitstellen des Lotsensystemes ist nach einem weiteren Merkmal der Erfindung vorgesehen, daß die jeweils aus dem Speicher ausgewählte Zielvorgabe in einer Ausgabeeinrichtung der Wegweisungseinrichtung berührungsfrei fernabfragbar dargestellt ist.

In der bevorzugten Einzelausgestaltung kann dabei vorgesehen sein, daß der Speicher durch einen Transponder gebildet und die jeweils aus dem Speicher ausgewählte Zielvorgabe in Form eines passiven, funktechnisch abfragbaren Datensatzes dadurch bereitgestellt wird, daß beispielsweise alle für die gewählte Zielvorgabe nicht benötigten Daten im Transponder abgedeckt oder für die gegenwärtige Abfrage unwirksam gemacht werden.

Hinsichtlich des Informations-oder Datenaustausches zwischen den der jeweils wagengebundenen Zielvorgabe und einer oder mehreren stationären Leitstellen des Lotsensystemes kann in einer aufwendigeren Verwirklichungsform aber auch vorgesehen sein, daß die wagengebundenen Wegweisungseinrichtungen mit einer aktiven Sender-/Empfängereinheit zum Austausch von Daten mit einer einzelnen oder einer Reihe von stationären Sender-/Empfängereinheiten ausgestattet sind. Bei einer solchen Verwirklichungsform muß der wagengebundenen Wegweisungseinrichtung ein hinreichender, verhältnismäßig starker aufladbarer Energiespeicher, insbesondere Akkumulator, zugeordnet sein.

Während im Vorstehenden davon ausgegangen ist, daß sämtliche Sender/Empfängereinheiten mit Funkwellen arbeiten kann im Rahmen der Erfindung selbstverständlich auch vorgesehen sein, daß die stationären und die mobilen, an den Schubgepäckwagen angeordneten Sender-/Empfängereinheiten durch Lichtsender-/Empfänger gebildet sind. Welchem der beiden an sich bekannten und für den hier vorgesehenen Zweck jeweils innerhalb gewisser Grenzen mehr oder minder hervorragend geeigneten Systeme im einzelnen Anwendungsfall der Vorzug zu geben ist, kann nur in Würdigung aller vor Ort gegebenen Umstände entschieden werden.

In weiterer Einzelausgestaltung kann unabhängig von dem für den Datenaustausch zwischen wagengebundenem und stationärem Teil des Lotsensystemes gewählten Übertragungssystem vorgesehen sein, daß die dem Fluggast optische Signale vermittelnde Einrichtung der Wegweisungseinrichtung aus einem Empfängerteil für die Ansteuerung eines Displays mit wenigstens drei wechselweise aktivierbaren Richtungspfeilen besteht. Es liegt dabei auf der Hand, daß das Display auch zur Ausgabe schriftlicher Hinweise, insbesondere Verhaltenshinweise, wie Rauchverbot oder dergl. verwendet werden kann, falls der Wagen auf seinem Weg zum Ziel eine Zone mit Rauchverbot oder sonstigen puritanischen Glaubensverwirklichungen durchquert. Darüber hinaus kann in einer Weiterbildung der Anzeigemöglichkeiten ferner vorgesehen sein, daß die Wegweisungseinrichtung zusätzlich zu ihrer optischen Wegweisung eine akustische Hinweisausgabe aufweist und beide Hinweisausgaben optische und akustische vermittels eines gemeinsamen Empfängerteiles ansteuerbar sind.

Hinsichtlich des stationären Teiles des erfindungsgemäßen Lotsensystemes kann nach einer ersten Organisationsform vorgesehen sein, daß dieses dezentral organisiert ist, wobei bei einem dezentral organisierten Lotsensystem an allen Abzweigungen oder Kreuzungen von Wegen bzw. Gängen der Anlage eine Sender-/Empfängereinheit zur Abfrage der aus dem Speicher jedes einzelnen Wagens ausgewählten Datensätze und zur Ausgabe einer entsprechenden Ansteuerung der optischen Richtungspfeile und der akustischen Signaleinrichtung der Wegweisungseinrichtung angeordnet sind. In einer ausgewählten Weiterbildung eines dezentral organisierten Lotsensystemes kann auch eine richtungsabhängige Ausgabe von Wegweisungshinweisen an den wagengebundenen Displays vorgesehen sein, was in bevorzugter Weise dadurch verwirklicht werden kann, daß die bei einem dezentral organisierten Lotsensystem an allen Abzweigungen oder Kreuzungen von Wegen bzw. Gängen der Anlage angeordneten stationären Sender-/Empfängereinheiten jeweils eine Sende- und zwei im gegenseitigen Abstand und mit entgegengesetzter Ausrichtung montierte Empfangsantennen aufweisen und derart an der Raumdecke eines Ganges oder Weges montiert sind, daß jede der Emfangsantennen einer Bewegungsrichtung eines Schubgepäckwagens zugeordnet ist. In Verbindung mit einer solchen zwei im gegenseitigen Abstand und mit entgegengesetzter Ausrichtung montierte Empfangsantennen aufweisenden stationären Sender/Empfängereinheiten werden als mobile Sender-/Empfängereinheiten gerichtete Transponder eingesetzt werden, welche mit einer stationären Sender/Empfängereinheit nur in paralleler Ausrichtung kommunizieren können.
In weiterer Vervollständigung dieser Gestaltungsform ist ferner vorgesehen, daß die die mobilen Sender-/Empfängereinheiten bildenden Transponder parallel zur Wagenlängsachse ausgerichtet an den Schubgepäckwagen angeordnet sind.

Nach einer anderen, zweiten Organisationsform kann hinsichtlich des stationären Teiles des erfindungsgemäßen Lotsensystemes vorgesehen sein, daß dieses zentral organisiert ist, dahingehend, daß ein zentraler Rechner zur Ausgabe einer entsprechenden Ansteuerung der optischen Richtungspfeile und der akustischen Signaleinrichtung der Wegweisungseinrichtung eingesetzt ist, wobei bei einem solchen zentral organisierten Lotsensystem die mobilen, an den Schubgepäckwagen angeordneten Sender-/Empfängereinheiten als aktive, mit einer eigenständigen Energieversorgung ausgestattete Einheiten ausgebildet sind und mit einer zentralen mit dem zentralen Rechner gekoppelten Sender-/Empfängereinheit zusammenwirken bzw. im Datenaustausch stehen.

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine schematische Grundrißdarstellung einer Flughafenanlage;
- Figur 2: eine mehr oder minder schematische schaubildliche Darstellung der Anordnung einer Informationstafel und einer zugeordneten Sender/Empfängereinheit;
- Figur 3: eine schaubildliche Darstellung eines Schubgepäckwagens mit wagengebundener Wegweisungseinrichtung.
- Figur 4: eine schaubildliche Darstellung der Touch-Screen der Wegweisungseinrichtung des Schubgepäckwagens nach Figur 3;

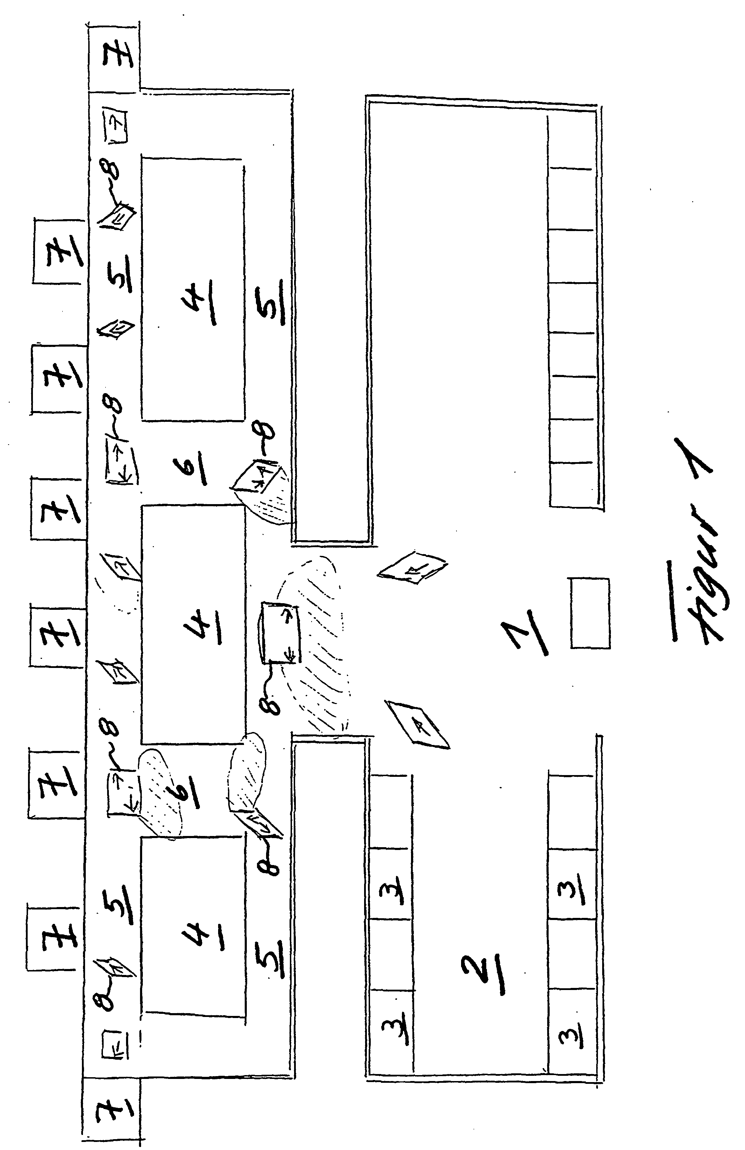

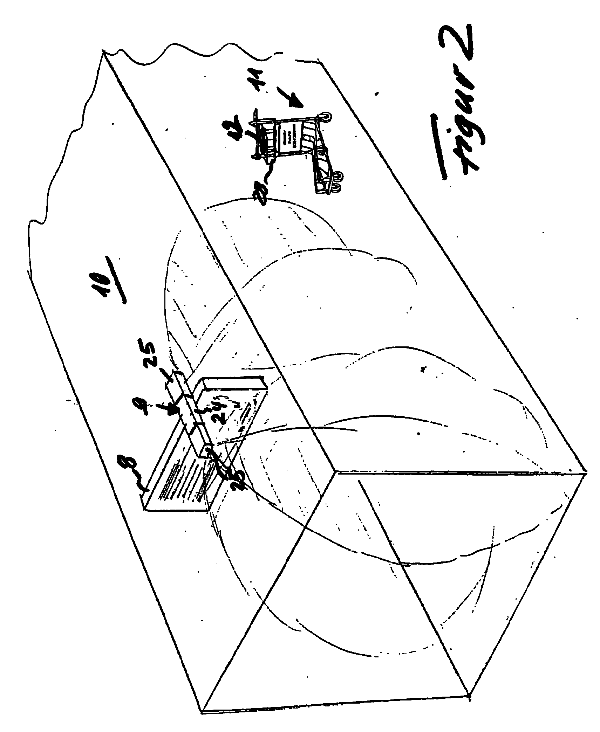

Die in der Figur 1 vereinfacht und schematisch angedeutete Flughafenanlage umfaßt beispielsweise einen Zentralbereich 1 in dessen Abflughalle 2 eine Vielzahl von Abfertigungsschaltern 3 untergebracht ist und in welcher sich ferner Ladengeschäfte und Restaurants 4 befinden. Die Flughafenanlage umfaßt ferner mit einer Vielzahl untereinander über Gänge 5 und Wege 6 verbundener und bezüglich des Zentralbereiches 1 peripher angeordneter Flugsteige 7, sog. Gates. Ausgehend von den Abfertigungsschaltern 3 bzw. ihrem Zentralbereich 1 sind in der Flughafenanlage an allen Abzweigungen bzw. Kreuzungen der Gänge 5 und der Wege 6 Informationstafeln 8 angeordnet, welche über eine Textausgabe Informationen über die Lage der einzelnen Flugsteige 7 bzw. den zum Erreichen eines bestimmten Flugsteiges zu beschreitenden Weg vermitteln sollen. Die dem Zentralbereich 1 nächstliegenden Informationstafeln 8 enthalten dabei, wie insbesondere in der Figur 2 angedeutet, eine Vielzahl von Informationen bezüglich der Lage der verschiedenen Flugsteige 7 sowie der Ankunfts-und Abgangszeiten der verschiedenen Flüge.

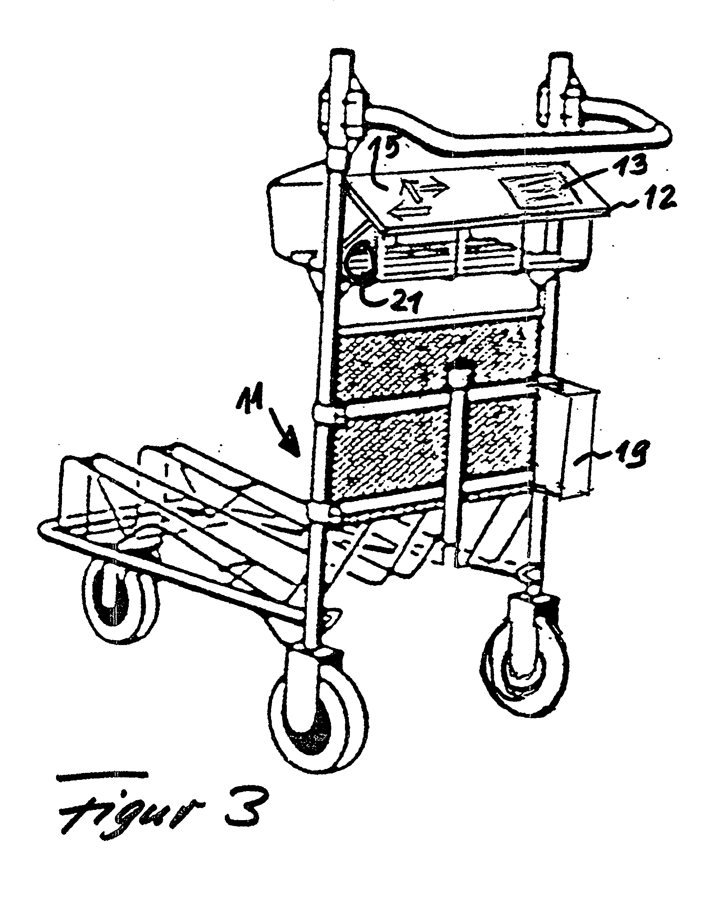

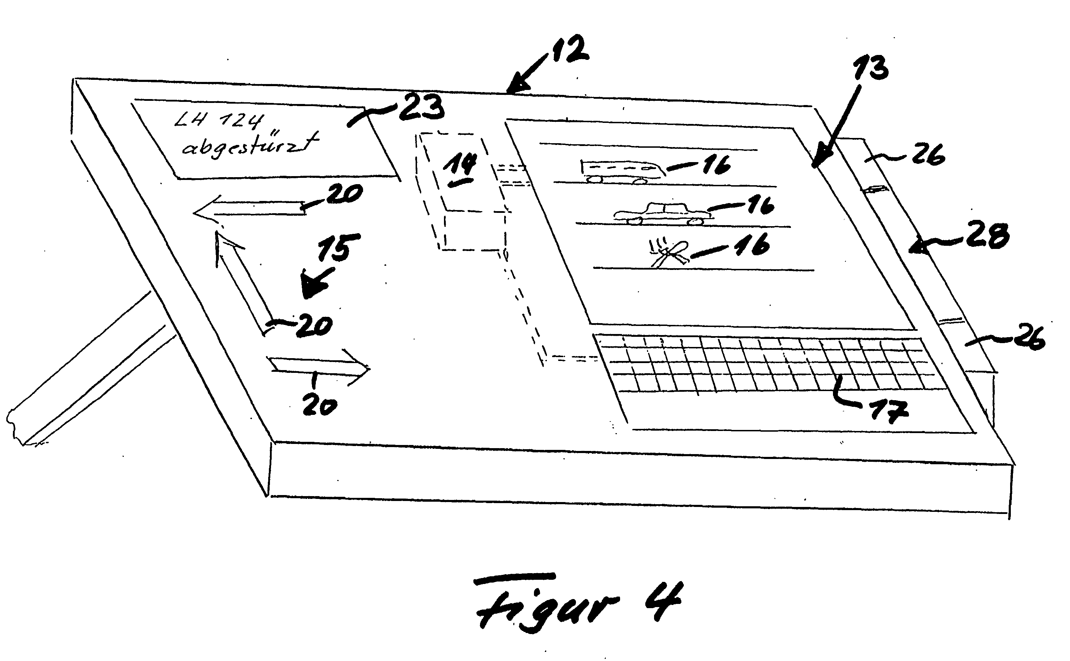

Den einzelnen Informationstafeln 8 sind als Abfragestationen, im gezeigten Ausführungsbeispiel, mit den mobilen, durch Transponder gebildeten Sender/Empfängereinheiten 28 korrespondierende Sender-/Empfängereinheiten 9 zugeordnet, welche die von den mobilen Sender-/Empfängereinheiten 28 abfragbaren, hier auf den Transpondern selektierten Daten erkennen und der jeweiligen Fragestellung entsprechende Wegweisungsdaten ausgeben. Die den einzelnen Informationstafeln 8 zugeordneten Sender-/Empfängereinheiten 9 sind, wie in der Figur 5 schematisch dargestellt an der Gebäude-bzw. Raumdecke 10 angeordnet und haben einen begrenzten vertikalen und horizontalen Reichweitenbereich.
Die Leitung des Fluggastes zu seinem jeweiligen Ziel erfolgt vermittels an jedem Schubgepäckwagen 11 angebrachter Wegweisungseinrichtungen, welche im Wesentlichen aus einem an einem Paneel 12 angeordneten Eingabefeld 13 für die Auswahl einer Zielvorgabe, einem am Paneel 12 angebrachten Datenspeicher 14 und einer am Paneel 12 vorgesehenen Signalausgabe 15 bestehen. Das Eingabefeld 13 ist wenigstens teilweise als sog. Touch-Screen ausgebildet und bezüglich der Auswahl von Zielvorgaben für unveränderlich in der Flughafenanlage angeordnete Ziele, wie beispielsweise Restaurant, Taxistand, Haltestellen öffentlicher Verkehrsmittel oder Leihwagenvermittler bzw. sonstiger Dienstleister mit standardisierten Symbolen 16 ausgestattet. Zur Eingabe variabler Zielvorgaben bzw. variabler Bestandteile von Zielvorgaben, wie Flugnummer oder Flugsteignummer bzw. Zielort oder Nationalität des Fluggastes ist das Eingabefeld 13 ferner mit einer Ziffern-und. Buchstabeneingabe 17 versehen. Dem Datenspeicher 14 ist zum Zwecke des Datenaustausches mit einem stationären, im gezeigten Ausführungsbeispiel durch eine Reihe von stationären Sender-/Empfängereinheiten 9 gebildeten Lotsensystem eine aktive Sender-/Empfängereinheit 28 zugeordnet, welche zusammen mit der Signalausgabe 15 von einem aufladbaren Energiespeicher 19 versorgt wird.
Die Signalausgabe 15 umfaßt ein Displays mit drei wechselweise aktivierbaren Richtungspfeilen 20 und kann durch einen Lautsprecher 21 zur Ausgabe akustischer Hinweise ergänzt werden. Das Display umfaßt ferner ein Feld 23 zur Ausgabe schriftlicher Hinweise, insbesondere Verhaltenshinweise, wie Rauchverbot oder dergl.. Bei dem gezeigten, dezentral organisierten Lotsensystem sind an allen Abzweigungen oder Kreuzungen von Wegen bzw. Gängen der Flughafenanlage stationäre Sender-/Empfängereinheiten 9 angeordnet, welche jeweils eine Sende- 24 und zwei im gegenseitigen Abstand und mit entgegengesetzter Ausrichtung montierte Empfangsantennen 25 aufweisen und Jeweils zu dessen Längserstreckung parallel ausgerichtet an der Raumdecke eines Ganges oder Weges montiert sind. In Verbindung mit diesen stationären Sender-/Empfängereinheiten 9 sind den mobilen Sender-/Empfängereinheiten 18 gleichfalls gerichtete Sendeantennen 26 zugeordnet, derart, daß ein Datenaustausch mit einer stationären Sender-/Empfängereinheit 9 bei in paralleler Ausrichtung von stationärer 9 und mobiler Sender-/Empfängereinheit 28 möglich ist.

## Patentansprüche

1. Lotsensystem für Fluggäste in Flughäfen mit einer Vielzahl untereinander über Gänge und Wege verbundener Flugsteige, sog. Gates, und einer Anzahl mehr oder minder zentral angeordneter Abfertigungseinrichtungen sowie einer Ankunfts-und Abflughalle mit Ladengeschäften und Restaurants und dergl. Versorgungseinrichtungen und einer Wegweisung durch Hinweistafeln und dergl. schriftliche Informationen enthaltenden Informationsträgern, wobei den Fluggästen Schubgepäckwagen zur Beförderung ihres Gepäckes angeboten werden, und wobei zur Lenkung bzw. Information der Fluggäste einerseits über die Fläche der Anlage hin verteilt eine Vielzahl von Sendestationen angeordnet ist und andererseits die Schubgepäckwagen jeweils mit einem mittels einer Einrichtung zur Eingabe einer Zielvorgabe einschaltbaren, zumindest optische Signale zur Wegweisung vermittelnden Empfänger, insbesondere einem Wegweisungssymbole aufzeigenden Display ausgestattet sind,
**dadurch gekennzeichnet,**
**daß** der optische Signale zur Wegweisung vermittelnde Empfänger, insbesondere ein Wegweisungssymbole aufzeigendes Display ein Eingabefeld zur Auswahl einer gewünschten Zielvorgabe als sog. Touch-Screen ausgebildet und außer mit einer Ziffernwähtscheibe für die Eingabe einer Flugnummer oder einer Flugsteignummer mit einer Vielzahl vorprogrammierter standardisierter Zielvorgaben, wie Eisenbahn, Taxi oder Leihwagenvermittlung versehen ist, wobei die Zielvorgabe für die an den Schubgepäckwagen angeordneten Wegweisungseinrichtungen hinsichtlich des gewünschten Zieles indirekt durch Eingabe eines Symbolbegriffes, wie Flugnummer oder Flugziel, oder aber Taxi oder Eisenbahn programmierbar ist.

2. Lotsensystem nach Anspruch 1, **dadurch gekennzeichnet, daß** die jeweils aus dem Speicher ausgewählte Zielvorgabe berührungsfrei femabfragbar dargestellt ist.

3. Lotsensystem nach Anspruch 1 und 2, **dadurch gekennzeichnet, daß** die jeweils aus dem Speicher ausgewählte Zielvorgabe in Form eines passiven, funktechnisch abfragbaren Datensatzes bereitgestellt wird.

4. Lotsensystem nach Anspruch 1 bis 3, **dadurch gekennzeichnet, daß** die optische Signale vermittelnde Einrichtung der Wegweisungseinrichtung aus einem Display mit wenigstens drei wechselweise aktivierbaren Richtungspfeilen und einem Empfängerteil für die Ansteuerung eines der Richtungspfeile besteht.

5. Lotsensystem nach einem der Ansprüche 1 bis 4, **dadurch gekennzeichnet, daß** die Wegweisungseinrichtung zusätzlich zu ihrer optischen Wegweisung eine akustische Hinweisausgabe aufweist und beide Hinweisausgaben vermittels eines gemeinsamen Empfängerteiles ansteuerbar sind.

6. Lotsensystem nach einem der Ansprüche 1 bis 5, **dadurch gekennzeichnet, daß** die Wegweisungseinrichtungen mit einer aktiven Sender-/Empfängereinheit zum Austausch von Daten mit einer einzelnen oder einer Reihe von stationären Sender-/Empfängereinheiten ausgestattet sind.

7. Lotsensystem nach einem der Ansprüche 1 bis 5, **dadurch gekennzeichnet, daß** die stationären und die mobilen, an den Schubgepäckwagen angeordneten Sender-/Empfängereinheiten durch Lichtsender-/Empfänger gebildet sind.

8. Lotsensystem nach einem der Ansprüche 1 bis 7, **dadurch gekennzeichnet, daß** bei einem dezentral organisierten Lotsensystem an allen Abzweigungen oder Kreuzungen von Wegen bzw. Gängen der Anlage eine Sender/Empfängereinheit zur Abfrage der aus dem Speicher jedes einzelnen Wagens ausgewählten Datensätze und zur Ausgabe einer entsprechenden Ansteuerung der optischen Richtungspfeile und der akustischen Signaleinrichtung der Wegweisungseinrichtung angeordnet sind.

9. Lotsensystem nach einem der Ansprüche 1 bis 7, **dadurch gekennzeichnet, daß** bei einem zentral organisierten Lotsensystem die mobilen, an den Schubgepäckwagen angeordneten Sender-/Empfängereinheiten als aktive, mit einer eigenständigen Energieversorgung ausgestattete Einheiten ausgebildet sind und mit einer zentralen Sender-/Empfängereinheit zusammenwirken.

10. Lotsensystem nach einem der Ansprüche 1 bis 8, **dadurch gekennzeichnet, daß** die bei einem dezentral organisierten Lotsensystem an allen Abzweigungen oder Kreuzungen von Wegen bzw. Gängen der Anlage angeordneten stationären Sender-/Empfängereinheiten jeweils eine Sende- und zwei im gegenseitigen Abstand und mit entgegengesetzter Ausrichtung montierte Empfangsantennen aufweisen und derart an der Raumdecke eines Ganges oder Weges montiert sind, daß jede der Emfangsantennen einer Bewegungsrichtung eines Schubgepäckwagens zugeordnet ist.

11. Lotsensystem nach einem der Ansprüche 1 bis 9, **dadurch gekennzeichnet, daß** in Verbindung mit zwei im gegenseitigen Abstand und mit entgegengesetzter Ausrichtung montierte Empfangsantennen aufweisenden stationären Sender-/Empfängereinheiten als mobile Sender-/Empfängereinheiten gerichtete Transponder eingesetzt werden, welche mit einer stationären Sender-/Empfängereinheit nur in paralleler Ausrichtung kommunizieren können.

12. Lotsensystem nach einem der Ansprüche 1 bis 11, **dadurch gekennzeichnet, daß** die die mobilen Sender-/Empfängereinheiten bildenden Transponder parallel zur Wagenlängsachse ausgerichtet an den Schubgepäckwagen angeordnet sind.

## Claims

1. Guiding system for air passengers in airports with a large number of passenger ramps, so-called gates, connected to one another by gangways and corridors, and a number of more or less centrally arranged check-in systems and an arrival and departure lounge with shops and restaurants and similar supply outlets, and sign-posting by information boards and similar information providers containing written information, wherein the air passengers are offered luggage trolleys to convey their luggage, and wherein a large number of transmitting stations is arranged distributed over the area of the installation for the guidance or informing of the air passengers, on the one hand, and, on the other hand, the luggage trolleys are each equipped with a receiver which can be switched on by means of a device for inputting a destination and imparting at least optical signals for sign-posting, in particular a display showing sign-posting symbols, **characterised in that** the optical signal for receivers imparting sign-posting, in particular a display showing sign-posting symbols, forms an input field as a so-called touchscreen for selecting a desired destination and in addition to a number selection panel for inputting a flight number or a passenger ramp number is provided with a large number of pre-programmed standardised destinations, and train, taxi or rental car information, wherein the destination for the sign-posting devices arranged on the luggage trolleys can be programmed with respect to the desired destination, indirectly by inputting a symbol code, such as flight number or destination, or else taxi or train.

2. Guiding system according to claim 1, **characterised in that** the respective destination selected from the memory can be displayed in a manner such that it can be scanned remotely and without contact.

3. Guiding system according to claims 1 and 2, **characterised in that** the respective destination selected from the memory is provided in the form of the passive data record which can be scanned using radio engineering.

4. Guiding system according to claims 1 to 3, **characterised in that** the device imparting optical signals to the sign-posting device consists of a display with at least three alternately actuable direction arrows and a receiver part for controlling one of the direction arrows.

5. Guiding system according to any of claims 1 to 4, **characterised in that** in addition to its optical sign-posting, the sign-posting device comprises an acoustic information output and the two information outputs can be controlled by means of a common receiver part.

6. Guiding system according to any of claims 1 to 5, **characterised in that** the sign-posting devices are equipped with an active transmitter/receiver unit for exchanging data with an individual stationary transmission/receiver unit or a series of stationary transmitter/receiver units.

7. Guiding system according to any of claims 1 to 5, **characterised in that** the stationary and the mobile transmitter/receiving units arranged on the luggage trolleys are formed by phototransmitters/-receivers.

8. Guiding system according to any of claims 1 to 7, **characterised in that** in a decentrally organised guiding system, a transmitter/receiver unit for scanning the data records selected from the memory of each individual trolley and for outputting a corresponding control of the optical direction arrows and the acoustic signal device of the sign-posting device is arranged at all branch points or intersections of corridors or gangways of the installation.

9. Guiding system according to any of claims 1 to 7, **characterised in that** in a centrally organised guiding system, the mobile transmitter/receiver unit arranged on the luggage trolleys are formed as active units equipped with an independent energy supply and cooperate with a central transmitter/receiver unit.

10. Guiding system according to any of claims 1 to 8, **characterised in that** in a decentrally organised guiding system, the stationary transmitter/receiver units arranged at all branch points or intersections of corridors or gangways of the installation each have one transmitting antenna and two receiving antennae assembled with mutual spacing and with opposed orientation and are assembled on the ceiling of a gangway or corridor in such a way that a movement direction of a luggage trolley is associated with each of the receiving antennae.

11. Guiding system according to any of claims 1 to 9, **characterised in that** in conjunction with two stationary transmitter/receiver units comprising receiving antennae assembled with mutual spacing and with opposed orientation, transponders set up as mobile transmitter/receiver units are used and can communicate with a stationary transmitter/receiver unit only in parallel orientation.

12. Guiding system according to any of claims 1 to 11, **characterised in that** the transponders forming the mobile transmitter/receiver units are arranged on the luggage trolleys parallel to the longitudinal axis thereof.

## Revendications

1. Système de guidage des passagers d'avions dans des aérogares comprenant de multiples portes d'embarquement appelées « gates », reliées entre elles par des couloirs ou chemins, un certain nombre de zones d'enregistrement et de contrôle situées plus ou moins au centre, un hall de départ et d'arrivée avec des commerces, des restaurants et d'autres services, et, un dispositif de signalisation constitué de panneaux indicateurs ou de supports d'information similaires contenant des informations écrites, les passagers disposant de chariots à bagages pour transporter les bagages à l'intérieur de l'aérogare, étant précisé qu'en vue du guidage, respectivement de l'information des passages, d'une part, de multiples stations émettrices sont réparties sur toute la surface de l'aérogare et, d'autre part, les chariots à bagages sont équipés d'un récepteur, en particulier d'un écran de visualisation affichant des symboles d'indication du chemin, pouvant être actionné par un dispositif permettant d'entrer un objectif donné et émettant au moins des signaux optiques d'indication du chemin, **caractérisé en ce que** le récepteur émettant des signaux optiques d'indication du chemin, constitué d'un écran de visualisation affichant des symboles d'indication du chemin, comporte un champ d'entrée pour choisir un objectif donné, constitué d'une touche tactile, est équipé d'un cadran de sélection numérique permettant d'entrer un numéro de vol ou de porte d'embarquement et contient une multitude d'informations standardisées préprogrammées concernant par exemple les trains, les taxis, les voitures de locations, les objectifs pour les dispositifs d'indication du chemin équipant les chariots à bagages étant programmables indirectement en entrant des concepts symboliques tels que les numéros de vol, la destination, les taxis, les chemins de fer.

2. Système de guidage selon la revendication 1 **caractérisé en ce que** l'objectif sélectionné dans la mémoire est interrogeable à distance, sans contact.

3. Système de guidage selon les revendications 1 et 2 **caractérisé en ce que** l'objectif sélectionné dans la mémoire est mis à disposition sous forme d'un ensemble de données passif, interrogeable de manière radioélectrique.

4. Système de guidage selon les revendications 1 à 3 **caractérisé en ce que** le moyen du dispositif d'indication du chemin émettant des signaux optiques est constitué d'un écran de visualisation avec au moins trois flèches de direction activables alternativement et d'un récepteur pour activer l'une des flèches de direction.

5. Système de guidage selon l'une des revendications 1 à 4 **caractérisé en ce que** le dispositif d'indication du chemin comporte, outre l'indication optique du chemin, une indication sonore, les deux types d'indications étant activables au moyen d'un récepteur commun.

6. Système de guidage selon l'une des revendications 1 à 5 **caractérisé en ce que** les dispositifs d'indication du chemin sont équipés d'une unité émettrice/réceptrice active en vue de l'échange de données avec une ou plusieurs unités émettrices/réceptrices stationnaires.

7. Système de guidage selon l'une des revendications 1 à 5 **caractérisé en ce que** les unités émettrices/réceptrices stationnaires et les unités émettrices/réceptrices mobiles équipant les chariots à bagages sont constituées d'émetteurs/récepteurs lumineux.

8. Système de guidage selon l'une des revendications 1 à 7 **caractérisé en ce que** dans un système de guidage organisé de manière décentralisée, chaque bifurcation ou chaque croisement des chemins ou couloirs de l'aérogare est équipé d'une unité émettrice/réceptrice pour l'interrogation des données choisies, contenues dans la mémoire de chaque chariot à bagages, et pour l'activation correspondante des flèches de direction optiques et des signaux sonores d'indication du chemin.

9. Système de guidage selon, l'une des revendications 1 à 7 **caractérisé en ce que** dans un système de guidage organisé de manière centralisée, les unités émettrices/réceptrices mobiles équipant les chariots à bagages sont constituées d'unités actives pourvues d'une alimentation en énergie autonome et coopèrent avec une unité émettrice/réceptrice centrale.

10. Système de guidage selon l'une des revendications 1 à 8 **caractérisé en ce que** dans un système de guidage organisé de manière décentralisée, chacune des unités émettrices/réceptrices stationnaires prévues à toutes les bifurcations ou à tous les croisements de chemins ou de couloirs dans l'aérogare, comporte une antenne émettrice et deux antennes réceptrices disposées à une certain distance l'une de l'autre et montées en direction opposée, et est montée sur le plafond du couloir ou chemin de sorte que chacune des antennes réceptrices est associée à l'une des directions de mouvement du chariot à bagages.

11. Système de guidage selon l'une des revendications 1 à 9 **caractérisé en ce que** les unités émettrices/réceptrices stationnaires, équipées de deux antennes réceptrices disposées à une certaine distance l'une de l'autre et montées en direction opposée, sont associées à des transpondeurs utilisés comme unités émettrices/réceptrices mobiles qui peuvent communiquer uniquement avec une unité émettrice/réceptrice orientée parallèlement.

12. Système de guidage selon l'une des revendications 1 à 11 **caractérisé en ce que** les transpondeurs constituant les unités émettrices/réceptrices mobiles sont montés sur les chariots à bagages en étant orientés parallèlement à l'axe longitudinal dudit chariot à bagages.
